# FASCICULE DE BREVET EUROPEEN

(11) **EP 4 179 256 B1**
(45) Date de publication et mention de la délivrance du brevet: **17.04.2024**
(21) Numéro de dépôt: 21748911.1
(22) Date de dépôt: 02.07.2021
(51) Int. Cl.: F23R 3/28, F23R 3/14, F23R 3/50, F23R 3/00

(54) **CHAMBRE ANNULAIRE DE COMBUSTION POUR UNE TURBOMACHINE D'AÉRONEF**
RINGBRENNKAMMER FÜR EINE FLUGZEUGTURBOMASCHINE
ANNULAR COMBUSTION CHAMBER FOR AN AIRCRAFT TURBOMACHINE

(30) Priorité: 10.07.2020 FR 2007328
(43) Date de publication de la demande: 17.05.2023
(73) Titulaire: SAFRAN AIRCRAFT ENGINES, 75015 Paris (FR)
(72) Inventeur: MUSAEFENDIC, Haris, 77550 MOISSY-CRAMAYEL (FR); LUNEL, Romain Nicolas, 77550 MOISSY-CRAMAYEL (FR); CABRE, Jean-François, 77550 MOISSY-CRAMAYEL (FR)
(74) Mandataire: Gevers & Orès
(86) Numéro de dépôt international: PCT/FR2021/051209
(87) Numéro de publication internationale: WO 2022/008820

(56) Documents cités:
- EP-A1- 0 821 201
- EP-A1- 3 115 692
- EP-A1- 3 141 818
- EP-A2- 0 724 119
- WO-A1-2019/224484

## Description

### Domaine technique de l'invention

La présente invention concerne une chambre annulaire de combustion pour une turbomachine d'aéronef.

### Arrière-plan technique

L'état de la technique comprend notamment WO-A1-2019/224484, EP-A1-0821201 et EP-A2-0724119.

Une turbomachine comprend un générateur de gaz comportant notamment un ou plusieurs compresseurs, par exemple basse pression et haute pression, disposé(s) en amont d'une chambre de combustion.

Par convention, dans la présente demande, les termes « amont » et « aval » sont définis par rapport au sens de circulation des gaz dans la turbomachine. De même, par convention dans la présente demande, les termes « interne » et « externe » sont définis radialement par rapport à l'axe longitudinal de la turbomachine, qui est notamment l'axe de rotation des rotors des compresseurs.

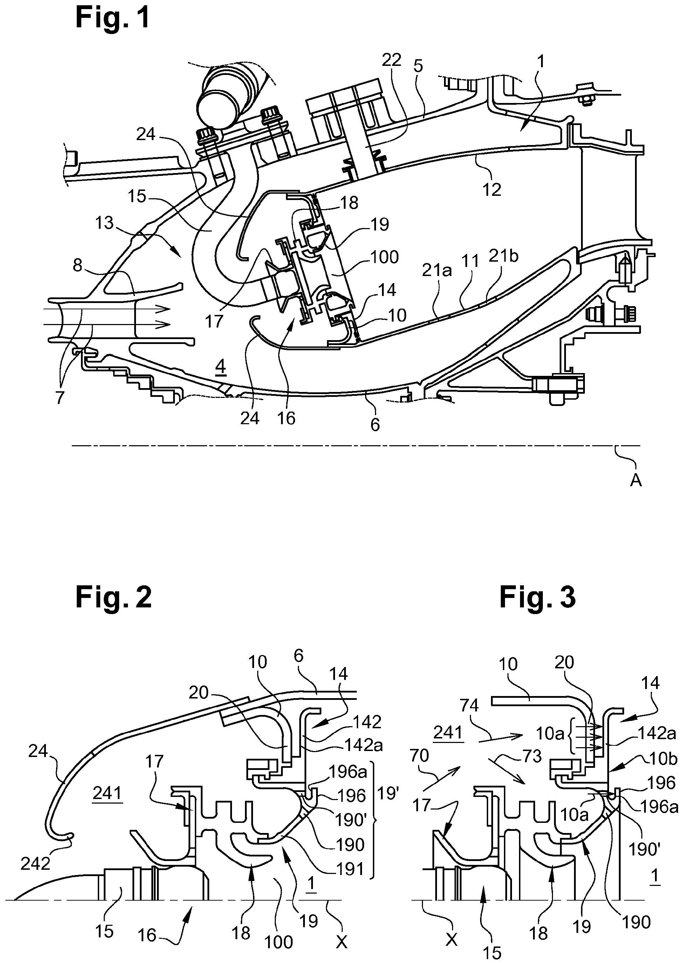

La figure 1 illustre partiellement une chambre 1 de combustion qui a une forme annulaire autour d'un axe A de révolution. La chambre 1 est placée dans une enceinte 4 annulaire délimitée radialement par un carter annulaire externe 5 et un carter annulaire interne 6. La chambre 1 est délimitée par des parois annulaires interne 11 et externe 12 coaxiales réunies en amont par une paroi annulaire 10 de fond de chambre. La paroi de fond 10 de la chambre 1 est communément appelé fond de chambre 10.

En référence à la figure 2, le fond de chambre 10 comprend des ouvertures 100 réparties angulairement autour de l'axe A et configurées pour être alignées chacune avec un dispositif d'injection 13 d'un mélange de carburant et d'air. Chaque dispositif d'injection 13 peut comprendre un injecteur 15 de carburant et un système d'injection 16 d'air.

L'injecteur 15 est coudé et a une extrémité fixée au carter externe et une extrémité opposée formant une tête qui est engagée et centrée dans le système d'injection 16.

Le système d'injection 16 est monté dans l'ouverture 100 du fond de chambre 10. Le système d'injection 16 comprend, de l'amont vers l'aval par référence à l'écoulement des gaz, des moyens 17 de support et de centrage de la tête de l'injecteur 15, des moyens 18 d'injection d'air, et des moyens 19 de diffusion d'un mélange air-carburant dans la chambre 1.

Sur la figure 2, les moyens 19 peuvent comprendre un bol 19' tronconique qui est évasé vers l'aval et comporte des orifices 190, 190' de passage d'air. Le bol 19' comprend une collerette annulaire externe 196 et une paroi tronconique 191. Les orifices 190' sont formés dans la paroi 191 et les orifices 190 débouchent en face de la collerette 196.

La chambre 1 est alimentée en air 7 comprimé provenant du compresseur haute pression (non représenté) via un diffuseur annulaire 8, et en carburant via les injecteurs 15 répartis angulairement autour de l'axe A. La combustion du mélange air/carburant est initiée par un dispositif d'allumage 22 et génère un rayonnement thermique de l'aval vers l'amont en direction du fond de chambre 10. Le fond de chambre 10 est ainsi soumis à de fortes températures (généralement comprises entre 1200 et 2000°C).

Afin de protéger le fond de chambre 10, au moins un déflecteur 14 annulaire (également appelé écran thermique) est placé dans la chambre 1 en aval et regard du fond de chambre 10 de manière sensiblement parallèle, et à faible distance de ce dernier. Le déflecteur 14 peut être annulaire ou sectorisé en une pluralité de secteurs de déflecteur répartis angulairement autour de l'axe A.

En référence à la figure 3, le déflecteur 14 est refroidi par impact de jets d'air provenant également du compresseur haute pression et pénétrant dans la chambre 1 à travers des perçages 20 de passage d'air de refroidissement pratiqués dans le fond de chambre 10. Ainsi, l'air de refroidissement du déflecteur 14, s'écoulant de l'amont vers l'aval, traverse le fond de chambre 10 à travers les perçages 20 puis vient impacter une partie d'une face amont 142a du déflecteur 14. L'air est ensuite guidé radialement vers l'intérieur et l'extérieur de la chambre 1 pour initier, sur chacune des parois interne 11 et externe 12, un film d'air de refroidissement qui s'écoule de l'amont vers l'aval. Par ailleurs, la collerette 196 est refroidie également par impact de jets d'air provenant du compresseur haute pression et pénétrant la chambre 1 à travers les orifices 190' de passage d'air de refroidissement.

Même si cette architecture permet de refroidir une partie du déflecteur 14, du bol 19' et du fond de chambre 10, elle pose toutefois quelques difficultés, et notamment certaines zones du fond de chambre peuvent ne pas être efficacement refroidies. Par exemple, les zones d'accrochage du déflecteur 14 et des dispositifs d'injection 13 dans le fond de chambre 10, sont difficiles à refroidir à travers les perçages 20 et les orifices 190, 190'.

En effet, de manière générale, les zones 10a du fond de chambre 10 sont refroidies et la zone 10b du fond de chambre 10 n'est pas refroidie (figure 3). Les zones refroidies 10a correspondent à la face amont 142a du déflecteur 14, et une face amont 196a de la collerette 196. La zone non refroidie 10b correspond à la zone d'accrochage du déflecteur 14 et du bol 19' de chaque dispositif d'injection 13 sur le fond de chambre 10. Cette zone 10b d'accrochage est notamment très sollicité thermiquement qui peut altérer les performances du fond de chambre lorsqu'il n'est pas refroidi correctement. L'insuffisance de refroidissement de cette zone d'accrochage peut donc réduire la durée de vie du fond de chambre et les performances de la chambre de combustion d'une turbomachine

L'objectif de la présente invention est de remédier au moins en partie à ces inconvénients.

### Résumé de l'invention

L'invention propose à cet effet une chambre annulaire de combustion pour une turbomachine d'aéronef, cette chambre comportant deux parois annulaires coaxiales, respectivement interne et externe, qui sont reliées en amont par une paroi annulaire de fond de chambre, un dispositif d'injection passant par un axe X et comprenant un système d'injection d'air, et un bol tronconique évasé vers l'aval et comportant des orifices de passage d'air, la chambre comportant en outre un déflecteur annulaire placé en aval de la paroi annulaire de fond de chambre, sensiblement parallèlement à cette dernière.

Le système d'injection d'air, la paroi de fond, le déflecteur et le bol de la chambre sont donc formés d'une seule pièce.

Une telle configuration permet de refroidir efficacement la totalité de la paroi annulaire du fond de chambre tout en conservant l'intégration des orifices de passage d'air du bol tronconique, au bénéfice du rendement de la combustion et plus globalement de la turbomachine. Cette configuration permet en outre de réduire l'encombrement de la chambre de combustion.

La chambre selon l'invention comprend également les caractéristiques suivantes:
- le déflecteur comprend une portion annulaire sensiblement parallèle à la paroi de fond et est séparée de la paroi de fond par un premier espace ;
- la portion annulaire comprend une extrémité interne par rapport à l'axe X reliée au bol et à la paroi de fond ;
- le bol comprend une première paroi tronconique et une seconde paroi tronconique sensiblement parallèle et séparées entre elles par un second espace, la paroi de fond et la première paroi tronconique du bol comportant des perçages de passage d'air dans lesdits premier et seconds espaces ;
- la paroi de fond de chambre et la première paroi tronconique du bol comportant des perçages de passage d'air dans lesdits premier et second espaces ;
- lesdits orifices du bol s'étendent à travers lesdites parois tronconiques du bol et jusqu'à déboucher dans la chambre ;
- lesdits débouchés des orifices du bol sont situés aux jonctions entre une paroi de la portion annulaire du déflecteur et la seconde paroi tronconique du bol.

En outre, la chambre de combustion selon l'invention peut également comprendre les caractéristiques suivantes:
- chaque système d'injection d'air comprend une vrille primaire formée d'une seule pièce avec la paroi de fond, le bol et le déflecteur ;
- chaque système d'injection d'air comprend une vrille secondaire et un venturi formés d'une seule pièce avec la paroi de fond, le bol et le déflecteur, le venturi étant disposé entre les deux vrilles ;
- le déflecteur comprend un rebord annulaire à sa périphérie externe qui s'étend parallèlement et à distance de ladite paroi externe, et un rebord annulaire à sa périphérie interne qui s'étend parallèlement et à distance de ladite paroi interne ;
- lesdits orifices du bol sont inclinés d'un angle compris entre 15 et 75°, ledit angle étant mesuré par rapport à l'axe X dudit dispositif d'injection. L'invention a pour deuxième objet une turbomachine comprenant une chambre de combustion telle que précédemment décrite.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une demi vue schématique en coupe axiale d'une chambre de combustion d'une turbomachine d'aéronef selon l'art antérieur ;
[Fig.2] la figure 2 est une vue schématique partielle en coupe axiale d'un fond de chambre de la chambre de combustion de la figure 1 ;
[Fig.3] la figure 3 est une vue similaire à la figure 2 et illustre les zones refroidies et non refroidie du fond de chambre de l'art antérieur ;
[Fig.4] la figure 4 est une vue schématique en coupe axiale d'une chambre de combustion selon l'invention ;
[Fig.5] la figure 5 est une vue schématique partielle en coupe axiale de la chambre de combustion de la figure 4 ;
[Fig.6] la figure 6 est une vue schématique en coupe axiale selon un plan de coupe C-C de la figure 4, illustrant l'amont de la chambre de combustion ;
[Fig.7] la figure 7 est une vue similaire à la figure 5 et illustre des zones refroidies d'un fond de la chambre selon l'invention.

### Description détaillée de l'invention

Les figures 1 à 3 ont été décrites dans ce qui précède.

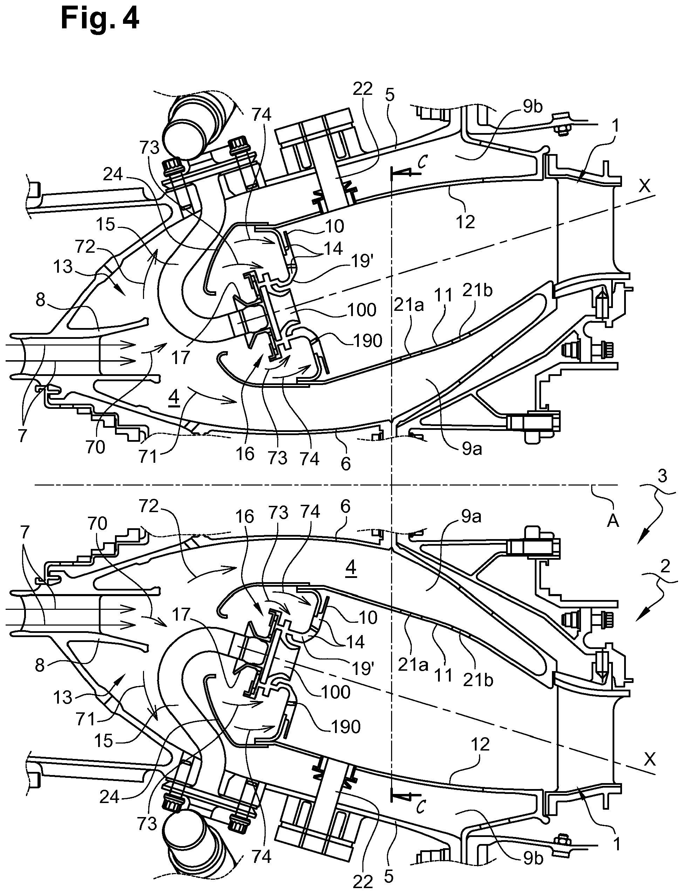

Un mode de réalisation de la chambre de combustion 1 selon l'invention est représenté schématiquement sur les figures 4 à 7.

La figure 4 représente une chambre annulaire 1 de combustion, d'axe A de révolution, d'un générateur 2 de gaz d'une turbomachine 3 d'aéronef.

La chambre 1 est placée en aval d'un ou plusieurs compresseurs, par exemple basse pression et haute pression, et en amont d'une ou plusieurs turbines, par exemple haute pression et basse pression.

L'axe A de révolution de la chambre 1 est confondu avec l'axe longitudinal de la turbomachine 3, qui est notamment l'axe de rotation des rotors des compresseurs et turbines.

La chambre 1 est placée dans une enceinte 4 annulaire délimitée radialement par un carter annulaire externe 5 et un carter annulaire interne 6. Un flux d'air 7 comprimé généré par les compresseurs débouche dans l'enceinte 4 via un diffuseur annulaire 8.

La chambre 1 est délimitée par des parois annulaires coaxiales, respectivement, interne 11 et externe 12. Les parois 11, 12 sont reliées en amont par une paroi annulaire de fond de chambre10 (appelée également « fond de chambre 10 » ou « paroi de fond 10 ») qui est sensiblement transversal à l'axe A.

Selon le mode de réalisation illustré sur les figures 4 à 7, la chambre 1 définit d'une part un passage d'air interne 9a, annulaire, délimité radialement par la paroi interne 11 et le carter interne 6, et d'autre part un passage d'air externe 9b, annulaire, délimité radialement par la paroi externe 12 et le carter externe 5.

La chambre 1 est alimentée avec un mélange d'air et de carburant par plusieurs dispositifs d'injection 13 d'air et de carburant répartis angulairement de manière régulière autour de l'axe A. Sur la figure 1, chaque dispositif d'injection 13 passe par un axe X sensiblement inclinée par rapport à l'axe A de la chambre 1. Chaque dispositif d'injection 13 comprend un injecteur de carburant 15 et un système d'injection d'air 16.

L'injecteur 15 est coudé et a une extrémité fixée au carter externe 5 et une extrémité opposée formant une tête qui est engagée et centrée dans le système d'injection 16, pour permettre de pulvériser le mélange d'air et de carburant dans la chambre 1.

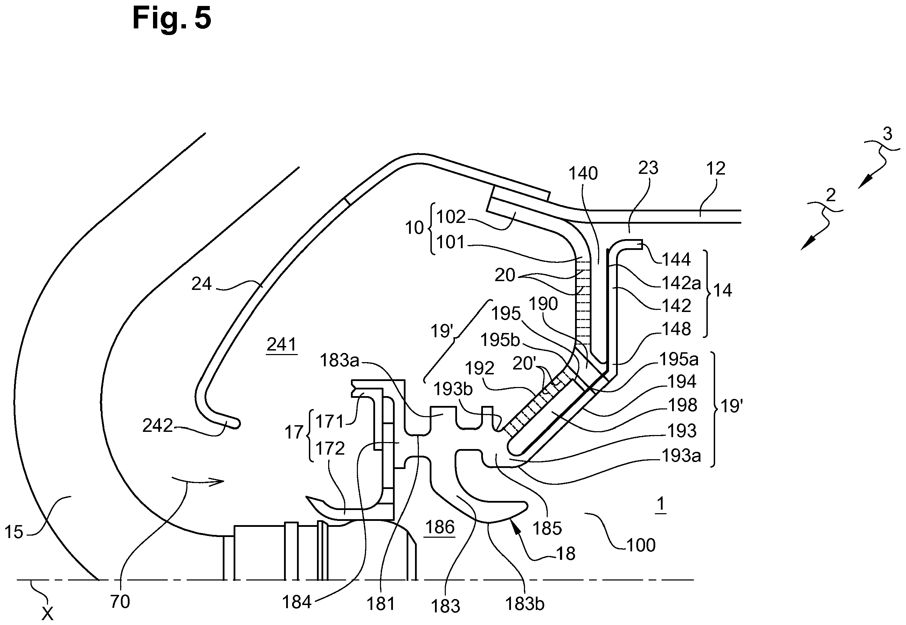

Sur les figures 4 et 5, le système d'injection 16 peut comprendre, de l'amont vers l'aval, des moyens 17 de support et de centrage de la tête de l'injecteur 15, des moyens 18 d'injection d'air, et des moyens 19 de diffusion d'un mélange air-carburant dans la chambre 1. Plus particulièrement, les moyens 19 comprennent un bol 19' tronconique qui est évasée vers l'aval et comportant des orifices 190 de passage d'air (figure 5).

La chambre 1 est ainsi alimentée en air comprimé par le système d'injection 19, cet air comprimé étant mélangé au carburant apporté par les injecteurs 15.

En référence à la figure 4, la chambre 1 peut également être alimentée en air comprimé via notamment des trous 21a dits « primaires » (par exemple une rangée circonférentielle sur la paroi 11 interne et sur la paroi 12 externe) et via des trous 21b « de dilution » (par exemple une rangée circonférentielle sur la paroi 11 interne et sur la paroi 12 externe) situés en aval des trous 20a primaires. Les trous 20a, 20b primaires et de dilution sont alimentés en air via les passages 9a, 9b.

Selon l'exemple, le fond de chambre 10 est recouvert en amont par un carénage annulaire 24 (autour de l'axe A) pour former ainsi avec le fond de chambre 10 un compartiment annulaire 241. Au niveau de chaque dispositif 13 d'injection, le carénage 26 comprend une lumière 242 de passage d'un flux d'air et de montage de l'injecteur 15.

La combustion du mélange air/carburant est initiée via un ou plusieurs dispositifs 22 d'allumage fixés sur la paroi 12 externe. Selon l'exemple illustré, les dispositifs 22 d'allumage sont situés longitudinalement au niveau des trous 20a primaires.

Afin de protéger le fond de chambre 10 en particulier vis-à-vis du rayonnement thermique engendré par la combustion, la chambre 1 comprend en outre au moins un déflecteur annulaire 14 placé dans la chambre 1, sensiblement en regard de perçages 20 pratiqués dans le fond de chambre10 (figure 5).

En référence à la figure 4, la paroi de fond de chambre 10 peut être segmentée circonférentiellement par rapport à l'axe A de la chambre 1. Chacune des parois de fond de chambre 10 segmentées peut, d'une part, comprendre une ouverture 100 pour l'alignement du dispositif d'injection 13 d'air et de carburant, et d'autre part, être reliée au déflecteur 14. Avantageusement, chacune des ouvertures 100 de la paroi de fond de chambre 10 est configurée pour le montage de l'injecteur 15.

L'une des particularités de l'invention réside dans le fait que chacune des parois de fond de chambre 10 segmentées est monobloc avec le système d'injection d'air 16 et le déflecteur 14. Le système d'injection d'air 16 peut être monté dans l'ouverture 100 de la paroi de fond de chambre 10 associé. Plus particulièrement, le système d'injection d'air 16, la paroi de fond 10, le déflecteur 14 et les bols 19' sont formés d'une seule pièce.

Selon le mode de réalisation illustré sur les figures 4 à 7, les moyens 18 d'injection d'air du système d'injection 16, le bol 19' tronconique, le fond de chambre 10 et le déflecteur 14 sont formés d'une seule pièce. En variante (non illustrée), les moyens 17 et 18 du système d'injection 16, le bol 19', le fond de chambre 10 et le déflecteur 14 sont formés d'une seule pièce.

En référence à la figure 5, le déflecteur 14 comprend une portion annulaire 142 sensiblement parallèle au fond 10.

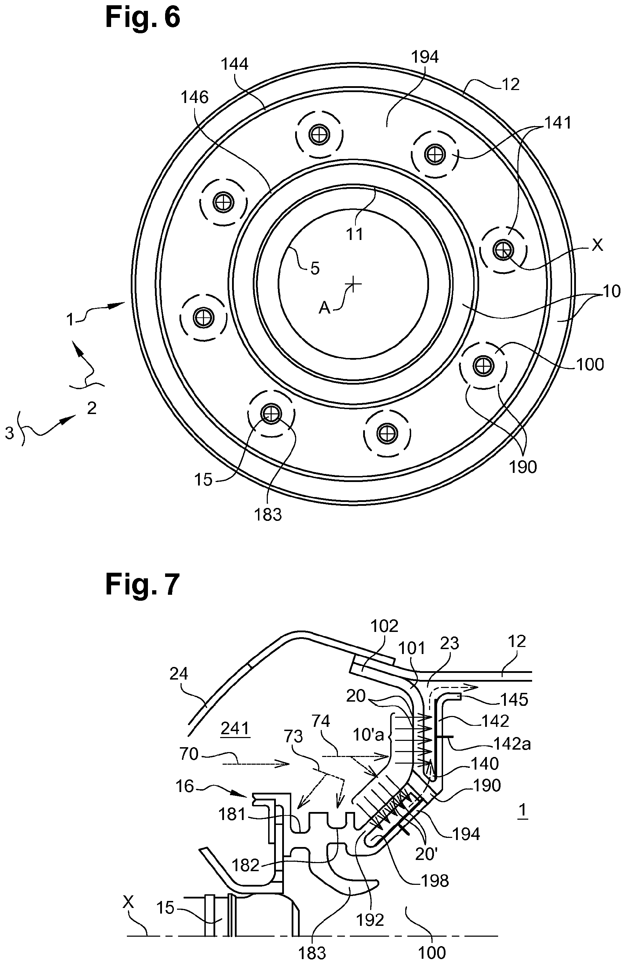

La portion annulaire 142 comprend un rebord 144 annulaire à sa périphérie externe par rapport à l'axe X, dit « rebord externe 144 », et qui s'étend vers l'aval sensiblement parallèlement à la paroi externe 12 de la chambre 1. Le rebord externe 144 est distant de la paroi externe 12 par un espace annulaire 23 de passage d'air (figure 5). La portion 142 comprend en outre un rebord 146 annulaire à sa périphérie interne par rapport à l'axe X, dit « rebord interne » 146 (figure 6) et qui s'étend vers l'aval sensiblement parallèlement à la paroi interne 11 de la chambre 1. Ce rebord interne est distant de la paroi interne 11 par un autre espace annulaire 23 de passage d'air.

Cette portion annulaire 142 est séparée du fond 10 par un premier espace annulaire 140. Ce premier espace 140 est en communication fluidique avec les espaces 23.

Par ailleurs, une face amont 142a de la portion 142 est disposée sensiblement en regard et en aval de la paroi du fond 10. La face amont 142a est séparée de la paroi du fond 10 par le premier espace 140.

La portion annulaire 142 comprend une extrémité externe et une extrémité interne 148 opposée par rapport à l'axe X. Les rebords externe 144 et/ou interne 146 sont situés sur l'extrémité externe de la portion 142. L'extrémité interne 148 relie le déflecteur 14 au fond de chambre 10 et au bol 19'.

Sur la figure 5, le fond de chambre 10 comprend une paroi annulaire 101 sensiblement transversale à l'axe X et des extensions annulaires 102 à ses périphéries externe et interne qui s'étendent sensiblement parallèlement aux parois externe 12 et interne 11 de la chambre 1.

Le fond de chambre 10 est fixé en amont à chacune des deux parois externe 12 et interne 11 de la chambre 1, par les extensions 102.

La paroi 101 est en regard et en amont de la portion 142 du déflecteur 14. Comme décrit ci-dessus, la paroi 101 est reliée à l'extrémité 148 de la portion annulaire 142 du déflecteur 14. Les perçages 20 sont pratiqués sur la paroi 101 et ces perçages 20 débouchent vers la face amont 142a du déflecteur 14. Cette paroi 101 est liée à un bord périphérique externe 195b d'une extrémité aval 195 du bol 19'. Ceci permet, en particulier, de former des jonctions entre la paroi 101 et le bol 19' qui sont disposées autour des orifices 190. Ainsi, entre les orifices 190, chacune des jonctions comprend un passage d'un flux d'air (provenant par exemple d'un second espace 198 et/ou des orifices 190).

Le bol 19' comprend une première paroi tronconique 192 et une seconde paroi tronconique 194 sensiblement parallèle entre elles. Les parois tronconiques s'évasent chacune, de l'amont vers l'aval, depuis les moyens 18 d'injection d'air vers le fond de chambre 10 et le déflecteur 14. Les parois tronconiques 192, 194 sont séparées entre elles par le second espace 198. Comme décrit ci-dessus, la première paroi 192 est disposée en regard et séparée de la seconde paroi 192 par le second espace 198. Les parois tronconiques 192, 194 sont reliées entre elles par une extrémité amont 193 et l'extrémité aval 195 opposée et séparée par le second espace 198. Avantageusement, la première paroi 192 comprend des perçages 20' qui débouchent en face de la seconde paroi 194.

L'extrémité aval 195 du bol 19' comprend les bords périphériques interne 195a et externe 195b opposés entre eux. Comme décrit ci-dessus, le bord externe 195b est relié à la paroi 101 du fond de chambre 10, alors que le bord interne 195a du bol 19' est relié à la paroi 142 du déflecteur 14.

L'extrémité aval 195 du bol 19' comprend en outre les orifices 190 de passage d'air pratiqués et répartis (par exemple sous forme de rangée circonférentielles) autour des axes X. Ces orifices 190 s'étendent à travers les parois tronconiques 192, 194 du bol 19' pour notamment déboucher dans la chambre 1 (figures 5 et 6). Ces orifices 190 peuvent également assurer une séparation entre, d'une part, le fond de chambre 10 et le bol 19', et d'autre part, le déflecteur 14 et le bol 19' (figure 5). Ainsi, les orifices 190 débouchent en aval à la jonction entre la seconde paroi tronconique 194 du bol 19' et la portion 142 du déflecteur 14, et en amont à la jonction entre la première paroi tronconique 192 du bol 19' et de la paroi 101 du fond de chambre 10.

En particulier, les orifices 190 comprennent chacun un pourtour amont débouchant vers l'extrémité 195 et la paroi 101, et un pourtour aval débouchant vers l'extrémité 195 et l'extrémité 148 de la portion 142.

Ces orifices 190 peuvent être inclinés circonférentiellement par rapport à l'axe X. L'inclinaison des orifices 190 permet notamment la mise en rotation du flux d'air sortant du bol 19' et le maintien de la flamme dans la chambre 1. De préférence, les orifices 190 sont inclinés d'un angle compris entre 15 et 75°, en particulier d'un angle sensiblement de 45° (figure 5). Cet angle est mesuré par rapport à l'axe X.

L'extrémité amont 193 du bol 19' est reliée, en particuliers par des bords périphériques interne 193a et externe 193b du bol 19', en aval des moyens 18 d'injection d'air.

Les figures 4 et 5 représentent le système d'injection 16 dans lequel les moyens 18 d'injection d'air comprennent des vrilles radiales (par rapport à l'axe X). Selon une variante (non représentée), les moyens 18 peuvent comprendre des vrilles axiales (par rapport à l'axe X).

Selon l'exemple, les vrilles radiales des moyens 18, respectivement primaire 181 et secondaire 182, sont coaxiales et délimitent chacune un flux d'air radial par rapport à l'axe X. Un venturi 183 annulaire est intercalé entre les deux vrilles 181, 182. Cette configuration permet de réaliser un mélange d'air, provenant des écoulements d'air des vrilles, et du carburant, provenant de l'injecteur 15, qui sont destinés à être injecté puis brûlé dans la chambre 1.

En référence à la figure 5, le venturi 183 a en section une forme sensiblement en « L » et comprend un rebord annulaire 183a sensiblement radial qui est intercalé axialement entre les deux vrilles 181, 182. Le venturi 183 s'étend axialement par rapport à l'axe X vers l'aval à l'intérieur de la vrille secondaire 182 et sépare les écoulements d'air issus des vrilles 181, 182. En particulier, le venturi 183 comprend une surface intérieure 183b présentant un col et délimitant un compartiment 186 de prémélange dans laquelle une partie du carburant éjecté de l'injecteur 15 se mélange au flux d'air délivré par la vrille primaire 181. Ce prémélange air/carburant se mélange ensuite en aval du venturi 183 au flux d'air provenant de la vrille secondaire 182 pour former un cône de carburant pulvérisé à l'intérieur de la chambre 1.

Les moyens 18 comprennent une première surface annulaire 184 en amont de la vrille primaire 181, et une seconde surface annulaire 185 en aval de la vrille secondaire 182. Cette seconde surface 185 peut être intégrée à l'extrémité amont 192 du bol 19'. La première surface 184 est configurée pour être montée sur les moyens 17 de support et de centrage de la tête de l'injecteur 15.

Les moyens 17 de support et de centrage comportent des surfaces annulaires, respectivement, interne 171 et externes 172 coaxiales. La surface 171 étant configurée pour être montée sur la première surface 184 des moyens 18 d'injection d'air. La surface 172 comprend une face interne configurée pour positionner la tête de l'injecteur 15. Par exemple, les moyens 17 sont des bagues annulaires de centrage.

Pour protéger les différentes zones du fond de chambre de la température des gaz brûlés et du rayonnement de la flamme, une partie de l'air fournie par le compresseur est utilisée pour refroidir ces parois.

Tel qu'illustré sur les figures 4 et 7, au niveau de chaque dispositif 13 d'injection, le flux d'air 7 comprimé généré par le compresseur est ainsi séparé en sortie du diffuseur 8 en trois flux, à savoir un flux d'air 70 central pénétrant dans le compartiment 241 via les lumières 242, un flux d'air 71 de contournement interne empruntant le passage 9a interne et un flux d'air 72 de contournement externe empruntant le passage 9b externe.

En référence à la figure 7, le flux d'air 70 central se divise au niveau de chaque dispositif d'injection 13 en, d'une part, un flux d'air 73 d'alimentation de la chambre 1 de combustion à travers les vrilles, respectivement, primaire 181 et secondaire 182, et d'autre part, un flux d'air 74 de refroidissement de la portion 142 du déflecteur 14 à travers les perçages 20 et la seconde paroi tronconique 194 du bol 19' à travers les perçages 20'. En effet, le flux d'air 74 refroidie par impact de jets d'air à la fois, la face amont 142a à travers les perçages 20 de la paroi 101 et une face externe (par rapport à l'axe X) de la seconde paroi 194 à travers les perçages 20' de la première paroi 192.

En particulier, le flux d'air 74 de refroidissement, traversant les perçages 20, passe dans le premier espace 140 puis à travers les espaces 23. Ceci permet de refroidir par un effet de convection les parois interne et externe de la chambre. Le flux d'air 74 traversant les perçages 20' peut également passer dans le premier espace 140 puis les espaces 23. Avantageusement, le second 198 et/ou le premier 140 espaces peuvent être au moins en partie en communication fluidique à travers les orifices 190.

Ainsi, en référence à la figure 7, les zones refroidies 10a' sont plus étendues (par rapport à la figure 3) de manière à assurer un refroidissement de l'ensemble du fond de chambre 10. En effet, le flux d'air 74 est capable de refroidir de façon effective la totalité de la paroi du déflecteur 14, puis être guidé radialement vers l'intérieur et l'extérieur de la chambre 1 pour générer des films d'air de refroidissement des parois interne 11 et externe 12.

Avantageusement, le flux d'air 74 de refroidissement passe également par les orifices 190 des bols 19'. Ceci permet aux orifices 190 de participer à la performance de la chambre de combustion, puisqu'ils permettent d'enrichir l'écoulement d'air dans le cône de carburant pulvérisé en amont de la chambre de combustion. En effet, l'homogénéisation du mélange air/carburant s'en trouve ainsi améliorée de manière à diminuer par exemple la production des suies et des émissions d'hydrocarbures imbrûlés (généralement entraînés par les films d'air de refroidissement des parois interne et externe de la chambre, sensiblement au niveau des espaces 23). La chambre de combustion selon l'invention apporte plusieurs avantages qui sont notamment de :
- optimiser la durée de vie du fond de chambre en améliorant son refroidissement ;
- conserver les orifices de passage d'air des bols des dispositifs d'injection ;
- assurer une liaison optimale entre le fond de chambre, les dispositifs d'injection et le déflecteur ;
- simplifier la fabrication du fond de chambre en une pièce intégrale ;
- limiter le nombre de pièces à accrocher sur le fond de chambre ;
- réduire le nombre de pièces au niveau du fond de chambre et l'encombrement de manière générale de la chambre de combustion ;
- s'adapter facilement aux générateurs de gaz existants.

Globalement, cette solution proposée est simple, efficace et économique à réaliser et à assembler sur une turbomachine d'aéronef, tout en assurant un refroidissement optimal et homogène sur l'ensemble d'un fond de chambre de combustion.

## Revendications

1. Chambre (1) annulaire de combustion pour une turbomachine (3) d'aéronef, cette chambre (1) comportant deux parois annulaires coaxiales, respectivement interne (11) et externe (12), qui sont reliées en amont par une paroi annulaire de fond (10) de chambre (1), un dispositif d'injection (13) passant par un axe (X) et comprenant un système d'injection d'air (16) et un bol (19') tronconique évasée vers l'aval et comportant des orifices (190) de passage d'air, la chambre (1) comportant en outre un déflecteur (14) annulaire placé en aval de la paroi annulaire de fond (10), sensiblement parallèlement à cette dernière,
le système d'injection d'air (16), la paroi annulaire de fond (10), le déflecteur (14) et le bol (19') étant formés d'une seule pièce,
le déflecteur (14) comprenant une portion annulaire (142) sensiblement parallèle à la paroi annulaire de fond (10) et séparée de la paroi annulaire de fond (10) par un premier espace (140), la portion annulaire (142) comprenant une extrémité interne (148) par rapport à l'axe (X) reliée au bol (19') et à la paroi annulaire de fond (10),
**caractérisée en ce que** le bol (19') comprend une première paroi tronconique (192) et une seconde paroi tronconique (194) sensiblement parallèles et séparées entre elles par un second espace (198), la paroi annulaire de fond (10) et la première paroi tronconique (192) du bol (19') comportant des perçages (20, 20') de passage d'air dans lesdits premier et second espace (140, 198),
lesdits orifices (190) du bol (19') s'étendant à travers les parois tronconiques (192, 194) jusqu'à déboucher dans la chambre (1),
lesdits débouchés des orifices (190) du bol (19') étant situés aux jonctions entre une paroi de la portion annulaire (142) du déflecteur (14) et la seconde paroi tronconique (194) du bol (19').

2. Chambre selon la revendication précédente, **caractérisée en ce que** chaque système d'injection d'air (16) comprend une vrille primaire (181) formée d'une seule pièce avec la paroi annulaire de fond (10), le bol (19') et le déflecteur (14).

3. Chambre selon la revendication précédente, **caractérisée en ce que** chaque système d'injection d'air (16) comprend une vrille secondaire (182) et un venturi (183) formés d'une seule pièce avec la paroi annulaire de fond (10), le bol (19') et le déflecteur (14), le venturi (183) étant disposé entre les deux vrilles (181, 182).

4. Chambre selon l'une des revendications précédentes, **caractérisée en ce que** le déflecteur (14) comprend un rebord (144) annulaire à sa périphérie externe qui s'étend parallèlement et à distance de ladite paroi externe (12), et un rebord annulaire à sa périphérie interne qui s'étend parallèlement et à distance de ladite paroi interne (11).

5. Chambre selon une des revendications précédentes, **caractérisée en ce que** lesdits orifices (190) du bol (19') sont inclinés d'un angle compris entre 15 et 75°, ledit angle étant mesuré par rapport à l'axe (X) dudit dispositif d'injection (13).

6. Turbomachine (3), en particulier d'aéronef, comprenant une chambre (1) de combustion selon l'une des revendications 1 à 5.

## Patentansprüche

1. Ringförmige Brennkammer (1) für eine Flugzeug-Turbomaschine (3), wobei diese Kammer (1) zwei koaxiale ringförmige Wände, jeweils eine innere (11) und eine äußere (12), die stromaufwärts durch eine ringförmige Bodenwand (10) der Kammer (1) verbunden sind, eine Einspritzvorrichtung (13), die durch eine Achse (X) verläuft und ein Lufteinspritzsystem (16) umfasst, und eine kegelstumpfförmige Schale (19') umfasst, die sich nach stromabwärts aufweitet und Luftdurchtrittsöffnungen (190) umfasst, wobei die Kammer (1) weiter einen ringförmigen Deflektor (14) umfasst, der stromabwärts der ringförmigen Bodenwand (10) im Wesentlichen parallel zu dieser platziert ist,
wobei das Lufteinspritzsystem (16), die ringförmige Bodenwand (10), der Deflektor (14) und die Schale (19') einstückig gebildet sind, wobei der Deflektor (14) einen ringförmigen Abschnitt (142) umfasst, der im Wesentlichen parallel zur ringförmigen Bodenwand (10) und von der ringförmigen Bodenwand (10) durch einen ersten Raum (140) getrennt ist, wobei der ringförmige Abschnitt (142) ein in Bezug auf die Achse (X) inneres Ende (148) umfasst, das mit der Schale (19') und der ringförmigen Bodenwand (10) verbunden ist,
**dadurch gekennzeichnet, dass** die Schale (19') eine erste kegelstumpfförmige Wand (192) und eine zweite kegelstumpfförmige Wand (194) umfasst, die im Wesentlichen parallel und durch einen zweiten Raum (198) voneinander getrennt sind, wobei die ringförmige Bodenwand (10) und die erste kegelstumpfförmige Wand (192) der Schale (19') Luftdurchtrittsbohrungen (20, 20') in den ersten und den zweiten Raum (140, 198) umfassen,
wobei sich die Öffnungen (190) der Schale (19') durch die kegelstumpfförmigen Wände (192, 194) erstrecken, bis sie in die Kammer (1) münden,
wobei sich die Mündungen der Öffnungen (190) der Schale (19') an den Übergängen zwischen einer Wand des ringförmigen Abschnitts (142) des Deflektors (14) und der zweiten kegelstumpfförmigen Wand (194) der Schale (19') befinden.

2. Kammer nach dem vorstehenden Anspruch, **dadurch gekennzeichnet, dass** jedes Lufteinspritzsystem (16) eine Primärverwirbelung (181) umfasst, die einstückig mit der ringförmigen Bodenwand (10), der Schale (19') und dem Deflektor (14) gebildet ist.

3. Kammer nach dem vorstehenden Anspruch, **dadurch gekennzeichnet, dass** jedes Lufteinspritzsystem (16) eine Sekundärverwirbelung (182) und ein Venturirohr (183) umfasst, die einstückig mit der ringförmigen Bodenwand (10), der Schale (19') und dem Deflektor (14) gebildet sind, wobei das Venturirohr (183) zwischen den zwei verwirbelung (181, 182) angeordnet ist.

4. Kammer nach einem der vorstehenden Ansprüche, **dadurch gekennzeichnet, dass** der Deflektor (14) einen ringförmigen Rand (144) an seinem Außenumfang, der sich parallel und in Abstand von der Außenwand (12) erstreckt, und einen ringförmigen Rand an seinem Innenumfang umfasst, der sich parallel und in Abstand von der Innenwand (11) erstreckt.

5. Kammer nach einem der vorstehenden Ansprüche, **dadurch gekennzeichnet, dass** die Öffnungen (190) der Schale (19') in einem Winkel im Bereich zwischen 15 und 75° geneigt sind, wobei der Winkel in Bezug auf die Achse (X) der Einspritzvorrichtung (13) gemessen wird.

6. Turbomaschine (3), insbesondere für ein Flugzeug, die eine Brennkammer (1) nach einem der Ansprüche 1 bis 5 umfasst.

## Claims

1. An annular combustion chamber (1) for an aircraft turbomachine (3), this chamber (1) comprising two coaxial annular walls, respectively, an internal (11) and an external (12), which are connected upstream by an annular bottom wall (10) of the chamber (1), an injection device (13) passing through an axis (X) and comprising an air injection system (16) and a frustoconical bowl (19') which is flared downstream and comprising air passage orifices (190), the chamber (1) further comprising an annular deflector (14) placed downstream of the annular bottom wall (10), substantially parallel to the latter,
the air injection system (16), the annular bottom wall (10), the deflector (14) and the bowl (19') are integrally formed,
the deflector (14) comprising an annular portion (142) substantially parallel to the annular bottom wall (10) and separated from the annular bottom wall (10) by a first space (140), the annular portion (142) comprising an internal end (148) with respect to the axis (X) connected to the bowl (19') and to the annular bottom wall (10),
**characterised in that** the bowl (19') comprises a first frustoconical wall (192) and a second frustoconical wall (194) substantially parallel and separated from each other by a second space (198), the annular bottom wall (10) and the first frustoconical wall (192) of the bowl (19') comprising an air passage bores (20, 20') in said first and second spaces (140, 198),
said orifices (190) of the bowl (19') extending through the frustoconical walls (192, 194) until they open into the chamber (1),
said outlets of the orifices (190) of the bowl (19') being located at the junctions between a wall of the annular portion (142) of the deflector (14) and the second frustoconical wall (194) of the bowl (19').

2. The chamber according to the preceding claim, **characterised in that** each air injection system (16) comprises a primary swirler (181) integrally formed with the annular bottom wall (10), the bowl (19') and the deflector (14).

3. The chamber according to the preceding claim, **characterised in that** each air injection system (16) comprises a secondary swirler (182) and a venturi (183) integrally formed with the annular bottom wall (10), the bowl (19') and the deflector (14), the venturi (183) being disposed between the two swirlers (181, 182).

4. The chamber according to one of the preceding claims, **characterised in that** the deflector (14) comprises an annular rim (144) at its external periphery which extends parallel to and spaced from said external wall (12), and an annular rim at its internal periphery which extends parallel to and spaced from said internal wall (11).

5. The chamber according to one of the preceding claims, **characterized in that** said orifices (190) of the bowl (19') are inclined at an angle of between 15 and 75°, said angle being measured with respect to the axis (X) of said injection device (13).

6. A turbomachine (3), in particular of an aircraft, comprising a combustion chamber (1) according to one of claims 1 to 5.
